(19)

Europäisches
Patentamt
European
Patent Office
Office européen
des brevets

(11) **EP 4 198 912 A1**

(12) **EUROPEAN PATENT APPLICATION**

(43) Date of publication:
**21.06.2023  Bulletin 2023/25**

(21) Application number: **21215052.8**

(22) Date of filing: **16.12.2021**

(51) International Patent Classification (IPC):
**G06V 10/25** [(2022.01)]   **G06V 10/26** [(2022.01)]
**G06V 10/74** [(2022.01)]   **G06V 10/82** [(2022.01)]
**G06V 20/54** [(2022.01)]

(52) Cooperative Patent Classification (CPC):
**G06V 20/54; G06V 10/25; G06V 10/26;
G06V 10/761; G06V 10/82;** G06V 2201/07;
G06V 2201/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Evercam Ltd.**
**Dublin D01 FW20 (IE)**

(72) Inventors:
 • **Ilias, Dahi**
  **Dublin, D01 FW20 (IE)**

 • **Maafi, Hanene**
  **Dublin, D01 FW20 (IE)**
 • **Herbst, Marco**
  **Dublin, D01 FW20 (IE)**
 • **Radouane, Kaddari**
  **Dublin, D01 FW20 (IE)**

(74) Representative: **Gillespie, Richard**
 **Inventorship**
 **Suite 10050**
 **5 Fitzwilliam Square**
 **Dublin 2, D02 R744 (IE)**

(54) **METHOD, APPARATUS AND PROGRAM FOR MONITORING OPEN-CONTAINER VEHICLES ON A CONSTRUCTION SITE**

(57)     The present disclosure is directed towards improvements in the field of load moving to or from a building site. In particular, the present disclosure is directed towards verifying a load-moving procedure by determining a load classification for an open-container vehicle based on captured images if it is determined that the open-container vehicle is entering or leaving a site and estimating a volume of material moved to or from the site based on the classification.

FIG. 1

EP 4 198 912 A1

**Description**

Technical Field

The present disclosure is directed towards improvements in the field of load moving to or from a building site. In particular, the present disclosure is directed towards verifying a load-moving procedure.

Background

Moving loads of material (e.g. earthmoving) is a significant part of most construction projects. A project manager must monitor load-moving operations, which increases the cost of the project. Typically load moving is verified by tracking open-container vehicles. For example, weighbridge systems can be used to weigh an open-container vehicle on entering and leaving a construction site.

The term 'open-container vehicle' is used in this document to refer to a vehicle that is used to transport materials for construction. One typical open-container vehicle used in construction is a tipping truck. A tipping truck is equipped with an open-box bed. The open-box bed is hinged at the rear and equipped with hydraulic rams to lift the front. As a result, the material in the bed can be deposited ('dumped') on the ground behind the truck at the site of delivery by extending the hydraulic rams. Tipping trucks are also commonly referred to as dumper trucks, dump trailers, dumper trailers, dump lorries, dumper lorries, dumpers, tip lorries, tipper lorries, tipper trucks, tip trucks, tip trailers, tipper trailers or tippers. Another type of open-container vehicle used in construction is a skip loader - where the open-box bed is a skip that can be removably mounted on the skip loader. In this document, the term 'skip' refers to a bucket, box, basket, cage or container which can be filled with materials or rubbish.

Traditional methods for tracking and counting open-container vehicles on a site use two lines to detect objects crossing the lines - where the direction of the vehicle is determined by comparing the timestamps from when each line was crossed - to determine whether a vehicle has entered or not. However, these methods suffer from event duplication and false positives, especially when the vehicle is manoeuvring back and forth between the two lines. Other traditional methods of vehicle tracking include the use of RFID (radio frequency identification) or GPS (global positioning systems).

There have been a number of attempts to complement existing weighbridge systems. For example, Quan Liu et al. discuss a convolutional neural network (CNN) that is used to classify whether a vehicle is full or empty, in the paper entitled "Deep Learning Model Comparison for Vision-Based Classification of Full/Empty-Load Trucks in Earthmoving Operations".

Separately, in the field of facial recognition, the paper entitled "FaceNet: A Unified Embedding for Face Recognition and Clustering" by F. Schroff et al. discloses a system that directly learns a mapping from face images to a compact Euclidean space where distances directly correspond to a measure of face similarity.

Objective

There is a continuing need to complement or replace weighbridge systems with systems and methods to assist vehicle identification. In particular, there is a need to track discrepancies between declared loads and actual arrival/departure loads. Advantageously, this would limit inconsistencies and reduce costs. Preferably, such systems assist in monitoring the number of vehicles on site. Preferably, such systems assist in checking the load of the open-container vehicle. Preferably, such systems also assist in tracking the open-container vehicle through its lifetime on a construction site. In this disclosure, 'time on site' is used to refer to the time an open-container vehicle spends at a construction site during a single visit. 'Lifetime on site' is used to refer to the total length of time the open-container vehicle spends on the construction site during a given construction project.

The present disclosure preferably provides systems and methods to augment weighbridge systems by providing a means for identifying a vehicle type or a load type. Further, the aim of the present disclosure is to provide systems and methods which are low cost and automatic, and which operate in real time. (Note that the word 'or' is used to refer to an inclusive or - e.g. A or B means one option from the following three options: A and B, A, B, while the word 'xor' is used to refer to an exclusive or - e.g. A xor B means one option from the following two options: A, B.)

Summary

The present disclosure is directed towards a method of monitoring construction. The method comprises: capturing images of a site with a sensor. Based on captured images, it is determined whether an object on the site is an open-container vehicle. Based on captured images, it is determined whether the open-container vehicle is entering or leaving the site. A load classification for the open-container vehicle is determined based on captured images if it is determined that the open-container vehicle is entering or leaving a site. The load classification is indicative of a volume of material in the open container of the open-container vehicle. A volume of material moved to or from the site is estimated based on the classification.

The load classification may be selected from a plurality of load classifications. For example, the load classifications available for selection may include a full classification, where the full classification is indicative of the open container being full. The load classifications available for selection may include an empty classification, where the empty classification is indicative of the open container being empty. Alternative classifications may also be available.

The method preferably comprises tracking the open-container vehicle, wherein tracking comprises determining data relating to whether the open-container vehicle is entering or leaving the site.

The method preferably comprises defining a region of interest, wherein determining data relating to whether the open-container vehicle is entering or leaving the site comprises calculating a direction of travel of the open-container vehicle within the region of interest.

The region of interest may be located proximate an entry to the site. Alternatively, the region of interest may be located remote from an entry to the site - for example on an access route to an entry.

The method preferably comprises assigning a tracking identification to the open-container vehicle.

The method preferably comprises: extracting a portion of image data relating to the open-container vehicle from the captured images; and determining whether an object on the site is an open-container vehicle from the extracted portion of image data.

Estimating the load classification preferably comprises segmenting the image data used to determine whether an object on the site is an open-container vehicle to extract image data relating to the open-container.

Determining data relating to whether the open-container vehicle is entering or leaving the site preferably comprises: when it is determined that an open-container vehicle is entering the site, recording a first set of gate data relating to the open-container vehicle; and when it is determined that an open-container vehicle is exiting the site: recording a second set of gate data relating to the open-container vehicle; and estimating a volume of material moved to or from the site based on comparing a second set of gate data to a first set of gate data.

Recording the first set of gate data preferably comprises recording a portion of a captured image that relates to the open-container vehicle in the first set of gate data; and recording the second set of gate data preferably comprises recording a portion of a captured image that relates to the open-container vehicle in the second set of gate data.

Recording the first set of gate data preferably comprises recording an entry timestamp, the entry timestamp being indicative of a time when the first set of gate data is recorded, wherein the first set of gate data includes the entry timestamp; and recording the second set of gate data preferably comprises recording an exit timestamp, the exit timestamp being indicative of a time when the second set of gate data is recorded, wherein the second set of gate data includes the exit timestamp.

Preferably, the first set of gate data is stored in a first-in-first-out queue of first sets of gate data.

Preferably, comparing the second set of gate data to the first set of gate data comprises selecting a first set of gate data from a plurality of first sets of gate data to compare to the second set of gate data.

The method preferably comprises calculating a re-identification score for a first set of gate data, based on a second set of gate data, wherein the re-identification score is based on: the difference between the second timestamp and the first timestamp; the position of the first set of gate data in the first-in-first-out queue; and an appearance metric, wherein the appearance metric is indicative of the degree of difference between the portion of a captured image recorded in the first set of gate data and the portion of a captured image recorded in the second set of gate data.

The method preferably comprises assigning a tracking identification to the open-container vehicle when the open-container vehicle is detected, wherein: the first and second sets of gate data comprise a tracking identification; and selecting the first set of gate data comprises selecting a first set of gate data that includes a tracking identification that matches the tracking identification of the second set of gate data.

The present disclosure is also directed towards an apparatus configured to perform a method in accordance with the present disclosure.

The present disclosure is also directed towards a computer program comprising instructions which, when executed by a computer coupled to a sensor, cause the computer to carry out a method in accordance with the present disclosure.

Brief Description of the Drawings

The present disclosure will be more clearly understood from the following description, given by way of example, with reference to the accompanying drawings, in which:

Figure 1 shows a modular plan of a system of the present disclosure;
Figure 2 shows a flowchart of a sub-routine of the present disclosure; and
Figure 3 shows a flowchart of a method of the present disclosure.

Detailed Description of the Drawings

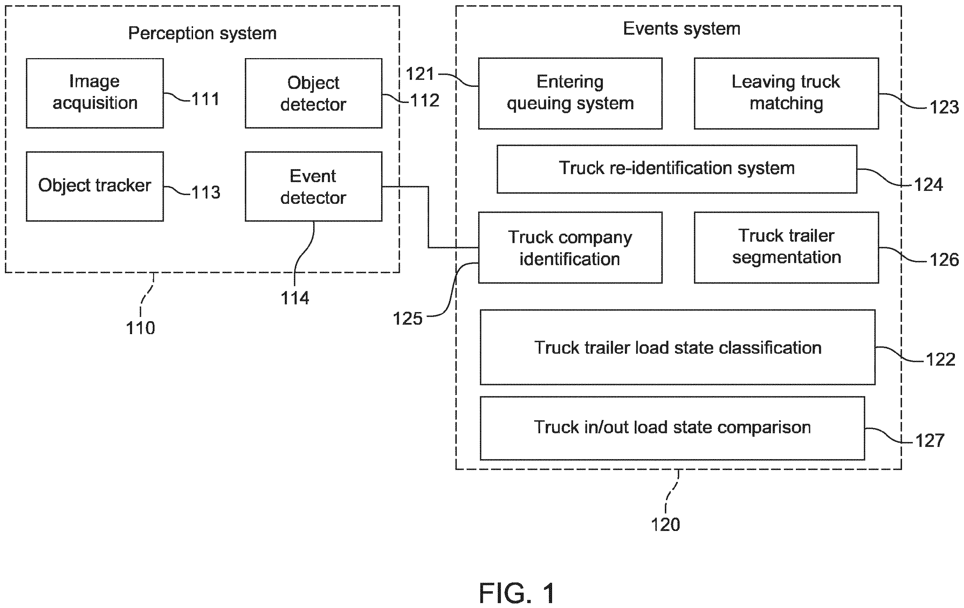

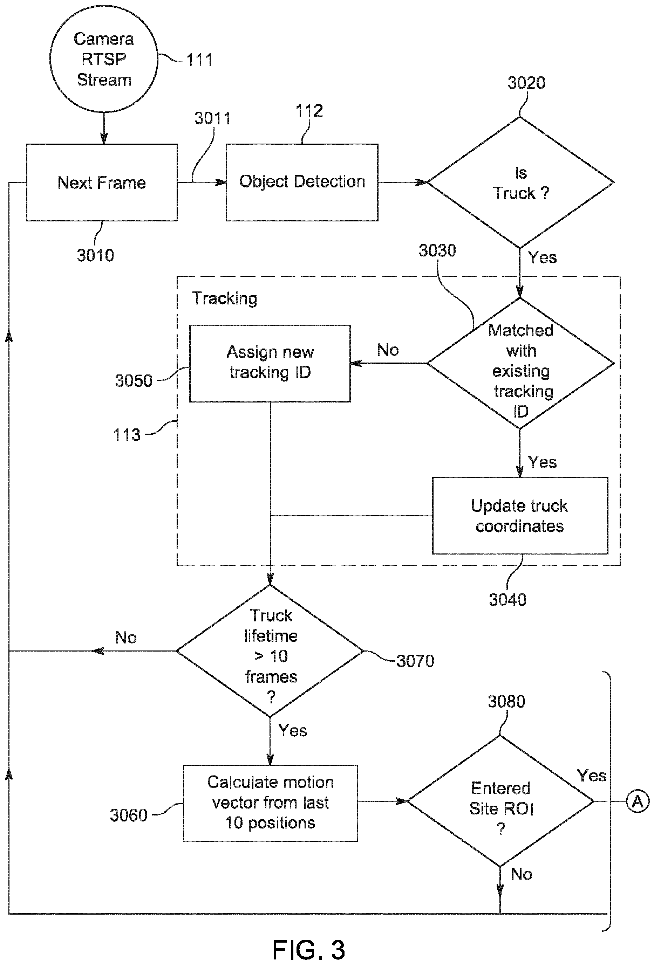

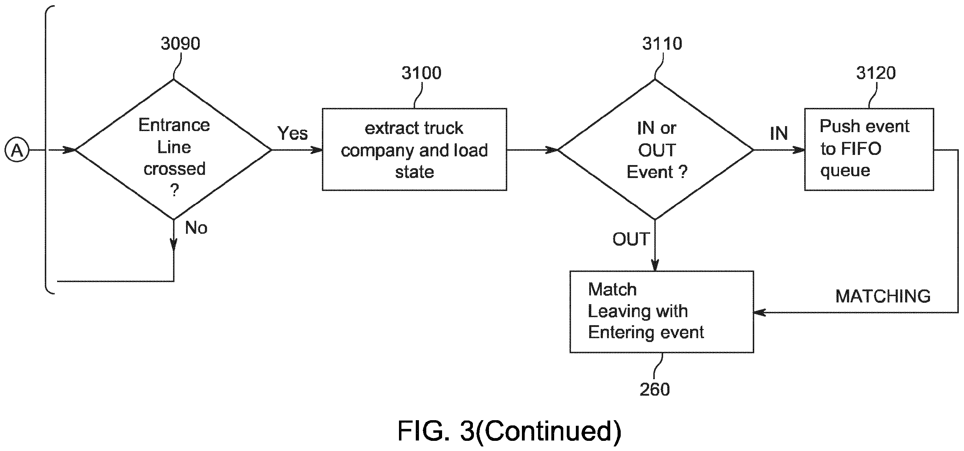

With reference to Figures 1 and 3, a system in accordance with the present disclosure preferably comprises a perception system 110. The perception system 110 comprises an image-acquisition module 111. The image-acquisition module 111 is configured to provide digital images from one or more optical sensors (e.g. one or more cameras) to the perception system 110. Any suitable optical sensor may be used. Indeed, other electromagnetic sensors (e.g. an infrared camera to provide night vision, an ultraviolet camera, or an RFID antenna or other RF antenna) can be used to provide additional functionality. The image-acquisition module 111 provides a video feed, which may be provided to an operator for data visualization or site monitoring. The video feed comprises image frames. In this disclosure, 'a frame' refers to one of the plurality of still images from the field of vision (FoV) of an optical sensor which is comprised in a video feed.

Preferably, the FoV of the one or more optical sensors includes the site. To put it differently, the one or more optical sensors are preferably arranged to provide frames which include an image of a site. For example, in the case where a plurality of optical sensors is used, the output from the optical sensors can be combined to provide a composite video feed of composite images. This provides a video feed including a frame, where the frame includes a composite image covering the site. A video feed of such composite images is preferable as it facilitates user supervision of the system. Alternatively, the images can cover portions of the site through which vehicles pass.

As shown in Figure 3, frame data 3010 from the video feed obtained by the image-acquisition module 111 is passed 3011 to an object detector 112 in the perception system 110. The object detector 112 is configured to detect vehicles on the site based on the data provided by the perception system. The object detector 112 is also configured to determine 3020 whether an open-container vehicle is present in frame data 3010 from the image-acquisition module. In particular, the object detector is configured to provide a classification of a portion of the frame data. The classification indicates that the image data in the portion of the frame is likely to relate to an open-container vehicle.

The object detector 112 may also optionally be configured to localize vehicles based on the data provided by the perception system - e.g. the object detector 112 may be configured to determine the coordinates of a bounding box containing an open-container vehicle in a frame captured by the image-acquisition module 111. A bounding box is an imaginary rectangle that serves as a point of reference for object detection and, for example, can be used to create a collision box for that object. A collision box is a box surrounding an object which is used for collision detection, typically at an early stage, so that objects with overlapping collision boxes are compared in detail. Preferably, the object detector 112 is configured to use an object-detection neural network to recognize open-container vehicles in frame data received from the image-acquisition module 111.

The perception system 110 filters the frame data based on the classification. A data set (or a portion of the data set) classified as relating to an open-container vehicle is passed to an object tracker 113. The object tracker 113 is configured to track the position of vehicles on the site.

Preferably, the portion of the data set passed to the object tracker 113 comprises coordinates indicative of the position of the open-container vehicle. The coordinates may be the coordinates of a predetermined point in or on the bounding box (e.g. the centroid of the bounding box) of the open-container vehicle relative to a predetermined origin point in the building site (e.g. the entrance to or the centre of the building site). Preferably a Cartesian (i.e. x, y) coordinate system is used.

The object tracker 113 is configured to track the coordinates of the open-container vehicles on the site. Preferably, the object tracker 113 is configured to use a multi-target Kalman filter tracking system. A Kalman filter, also known as linear quadratic estimate (LQE), is an algorithm that uses a series of measurements observed over time. In any real-life system, measurements will depend on one or more unknown variables because of noise and other inaccuracies. The Kalman filter tracking system produces estimates of these unknown variables. These estimates tend to be more accurate than estimates of unknown variables based on a single measurement. This is because the Kalman filter tracking system estimates a joint probability distribution over the variables over time.

On receipt of the portion of the data set from the object detector 112, the object tracker 113 is configured to match 3030 the portion of the data set of the open-container vehicle to an existing tracking ID. If a match can be found, the positional data associated with the tracking ID can then be updated 3040 with the coordinates.

To assist in this matching 3030, the portion of the data set provided to the object tracker 113 preferably includes the dimensions of the open-container vehicle. For example, the width, height or length of the open-container vehicle can be extracted by the object detector 112 and passed to the object tracker 113 along with the coordinates. These dimensions can be specified in pixel units. Further, a classification of the open-container vehicle can be included in the portion of the data set provided to the object tracker 113.

If the object tracker 113 is unable to match the portion of the data set with an existing tracking ID (for example, if the open-container vehicle has just arrived on site) then the object tracker 113 is configured to assign 3050 a new tracking ID to the open-container vehicle. Preferably, the new tracking ID is an identifier assigned to an open-container vehicle which is distinguishable from the tracking IDs assigned to other open-container vehicles on the site.

Ideally, the frame data 3010 provided to the object detector includes the whole site. In this case, the tracking ID of an open-container vehicle is consistent throughout its time on site. As a result, an open-container vehicle is trackable throughout the time it is detectable in the frame data.

The direction of travel of the open-container vehicle can be calculated 3060. Preferably, the direction is calculated using a motion vector derived from coordinates obtained by the object tracker 113. A plurality of motion vectors for the open-container vehicle can be stored in a motion history. Ideally, the direction of the open-container vehicle is calculated using the motion history of the vehicle. Preferably, this direction is checked, preferably continuously, to monitor the open-container vehicle's direction.

For example, in a system or method according to the present disclosure, the object tracker 113 can compute a direction motion vector using a number, N, of coordinates. Preferably, the N coordinates are obtained from N temporally spaced frames captured by the image-acquisition module when the vehicle is inside the regions of interest (ROI). Thus, the open-container vehicle's direction is the average of the N direction motion vectors.

Before the direction of the open-container vehicle is calculated 3060, the system can check 3070 if sufficient motion vectors have been obtained to calculate the direction of travel. For example, if N motion vectors are required for the direction calculation 3060 and less than N motion vectors have been obtained, then the direction is not calculated. Instead, the system again obtains frame data 3010 from the image-acquisition module 111. This frame data 3010 is then processed as described above to obtain another motion vector.

The user may define one or more regions of interest (ROI) within the site. For example, an interface may be provided that includes a display for displaying frames from the image-acquisition module. The user may be able to specify an ROI within the frame. Thus, the user can define, for example, the site entrance as an ROI. Preferably a system in accordance with the present disclosure can monitor a plurality of ROIs at the same time.

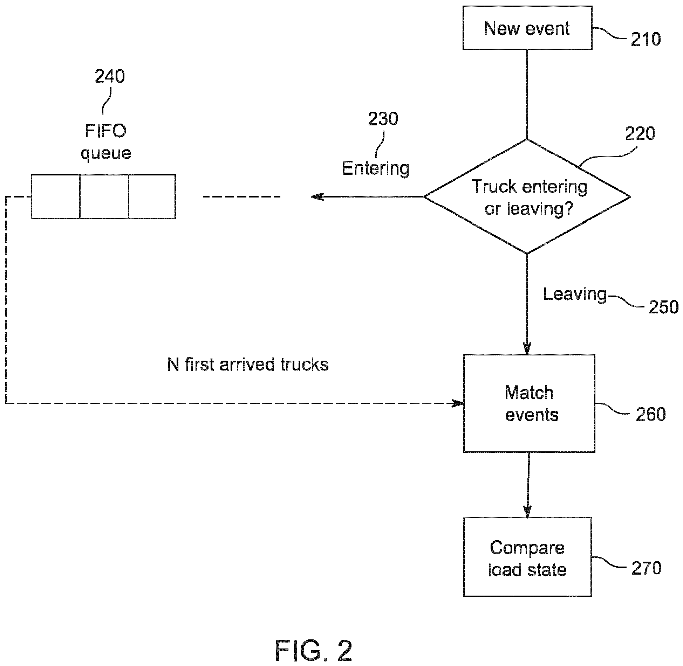

With reference to Figure 2 (and continuing reference to Figures 1 and 3), when an open-container vehicle enters 3080 an ROI, the event detector 114 is activated. Preferably, an event 210 is triggered by the event detector 114 when the open-container vehicle crosses a line marking an entrance of the site. When an event is detected, the event detector passes frame data to an event system 120. The event system is configured to obtain 3100 meta data relating to the open-container vehicle that triggered the event.

For example, the event system 120 preferably comprises owner-identification module 125. The owner-identification module 125 is configured to extract meta data relating to the owner of an open-container vehicle from frame data provided to the event system 120. The term owner is used in this document to refer to an owner or an operator of a vehicle - for example, a haulage company, contractor, sub-contractor or other service provider. For example, the owner-identification module 125 can be configured to calculate the most likely owner of an open-container vehicle based on markings present on the open-container vehicle, where some of the markings are indicative of the owner of the vehicle (e.g. a company name or branding).

The most likely owner can be determined using a neural network. For example, owner-identification module 125 can be coupled to or include a neural network. The image data within the bounding box coordinates can be provided to this neural network to provide an embedding vector. An embedding vector (which is also known as an embedding or a vector embedding) is used to represent discrete variables as continuous vectors.

The neural network can for example be a convolutional neural network (CNN or ConvNet), which is particularly suitable for transforming visual data images into embeddings.

CNNs process an input via hierarchical small local sub-inputs termed receptive fields. Each neuron in each network layer processes a specific receptive field from the former layer. Each layer either applies a convolution on the receptive field or reduces the input size, which is called subsampling.

The network is trained to teach the network the network weights (i.e. the embedding model) for the neurons. During training, the weights are optimized so that images with the same labels are embedded closer compared to images with different labels. After training, the embedded model can be used to transform an image into an embedding vector.

Although CNN has been used as an example, vector embeddings can be created using any suitable method known in the art.

Once a vector embedding has been calculated, it can be compared with pre-recorded vector embeddings of known owners. The difference between the calculated vector embedding and a plurality of the pre-recorded vector embeddings can be determined. By matching the calculated vector embedding to the pre-recorded vector embedding with the smallest difference to the calculated vector embedding, a most likely owner of the open-container vehicle can be determined. The pre-recorded vector embeddings can be stored in any suitable means (for example, a look-up table or a database).

Preferably, the owner-identification module 125 makes M separate determinations of the most likely owner from M temporally separated frames while the open-container vehicle is within the ROI, where M is an integer greater than one. More preferably, the owner-identification module 125 makes separate calculations of the most likely owner from the frames captured while the open-container vehicle is within the ROI. When the vehicle leaves the ROI, the owner associated with the open-container vehicle is the most likely owner, that is, the owner that was calculated most frequently from the M separate calculations. The owner associated with the open-container vehicle can be displayed in conjunction with the vehicle on a visual display to improve data visualization.

Preferably, the event system 120 comprises a load-state classification module 122. The load-state classification module 122 is configured to extract meta data about the status of the open container of the open-container vehicle. In particular, the load-state classification module 122 is configured to determine a load classification. The load classification is data indicative of whether the open container of the open-container vehicle is full or empty.

The load-state classification module may be considered a sub-module that comprises two neural networks: i) a container segmentation network; and ii) a classification network.

The frame data relating to the open-container vehicle is provided to the load-state classification module 122 when the open-container vehicle is in the ROI. Preferably, not all of the frame data relating to the open-container vehicle is provided. Instead, a portion of the frame data is provided. This portion of the frame data includes the image data within the coordinates of the bounding box.

Preferably, a segmentation module 126 is configured to perform segmentation on the data provided to the load-state classification module 122. The segmentation module 126 performs segmentation on this data to extract image data relating to the open container of the open-container vehicle - i.e. a set of pixels relating to the open container are extracted as an image object. Preferably, a neural network is used to perform this segmentation. The image data (i.e. the image object) relating to the open container is then provided to the load-state classification module 122.

Preferably, the load-state classification module 122 is configured to use a neural network to improve the accuracy of the load classification. Preferably, the load-state classification module 122 can perform L separate classifications for L temporally separated frames while the open-container vehicle is in the ROI, where L is an integer greater than one. More preferably, the load-state classification module 122 can perform separate classifications for each frame captured while the open-container vehicle is in the ROI. If the number of times the load-state classification module assigned the open-container vehicle a load classification of full while the open-container vehicle was in the ROI is greater than the number of times the load-state classification module assigned the open-container vehicle a load classification of empty while the open-container vehicle was in the ROI, then the load classification is determined to be full. Similarly, if the number of times the load-state classification module assigned the open-container vehicle a load classification of empty while the open-container vehicle was in the ROI is greater than the number of times the load-state classification module assigned the open-container vehicle a load classification of full while the open-container vehicle was in the ROI, then the load classification is determined to be empty.

However, the load-state classification module 122 can preferably perform this determination using a single observed load classification. For example, the number of times the load-state classification module 122 assigned the open-container vehicle the first load classification while the open-container vehicle is in the ROI can be divided by L. If the resultant number is greater than a predetermined threshold (e.g. 0.5) then the open-container vehicle is determined to have the first load classification. Otherwise, the open-container vehicle is determined to have a second load classification. If the determination is performed in this way, the load-state classification module 122 can assign a single load classification (e.g. the first load classification) to the open-container vehicle and still determine whether or not the open-container vehicle has the first or second load classification.

Preferably, the first load classification is a full-load classification, and the second load classification is an empty-load classification.

Preferably, the event system 120 is configured to determine 3110 whether the open-container vehicle is entering or leaving the portion of the site included in a frame from the ROI.

If the open-container vehicle is determined to be entering 230 the site, a data structure relating to the open-container vehicle is stored 3120 in a storage means 121. Preferably the storage means is a queueing system. Preferably, the queueing system comprises a first-in-first-out (FIFO) queue 240 and the data structure relating to the open-container vehicle is pushed into the FIFO queue 240.

Preferably, the data structure includes a timestamp indicative of the time the open-container vehicle entered the site. Preferably, the data structure includes the tracking ID determined by the object tracker 113 for the open-container vehicle.

Preferably, the data structure also comprises meta data extracted by the event system 120 relating to the open-container vehicle. For example, the meta data can include one or more of: data relating to the appearance of the open-container vehicle (e.g. an image of the open-container vehicle), a classification of the type of open-container vehicle, information identifying the owner of an open-container vehicle, etc. As described above, the meta data can also include information indicating the volume of material in the open container of the open-container vehicle. For example, and as described above, the meta data can include a load classification (where the load classification is data indicative of whether the open container is full or empty).

If the open-container vehicle is determined to be exiting 250 the site, the event system 120 is configured to provide a data structure relating that open-container vehicle to a matching module 123. As described in more detail below, the matching module 123 is configured to match 260 the data structure relating to the open-container vehicle that is exiting the site to a data structure stored in the storage means 240 of an open-container vehicle that previously entered the site.

In a system in accordance with the present disclosure, it is assumed that open-container vehicles operate on a first-in-first-out basis to some extent (i.e. typically the first vehicle arriving on site is the first vehicle to leave the site). In this case, data structures relating to open-container vehicles that previously entered the site are stored in a FIFO queue. When an open-container vehicle is determined to be exiting the site, the tracking ID of the open-container vehicle is compared with the tracking IDs of the first X data structures in the FIFO queue (where X is a predetermined number).

If the tracking ID of the open-container vehicle exiting the site matches one of the tracking IDs of the first X data structures in the FIFO queue, then the meta data relating to the open-container vehicle exiting the site can be compared with the meta data in the data structure having the matching tracking ID. For example, a load-state comparison module 127 can be configured to compare the load state of the vehicle on entry to the site with the load state of the vehicle on leaving the site.

However, it is possible that an open-container vehicle might arrive and leave the site outside of a FIFO order. In addition, there is a risk that it is not possible, using the tracking ID, to match an open-container vehicle determined to be exiting with an open-container vehicle that entered the site. For example, the object tracker 113 can lose track of an open-container vehicle, perhaps due to the open-container vehicle no longer being detectable in the data provided by the image-acquisition module 111. This may occur, for example, due to occlusions or other factors such as the use of multiple cameras for an irregularly shaped site or a site which contains areas which are not within the field of vision of the one or more optical sensors. In this case, when the open-container vehicle is re-detected by the object detector 112, the object tracker 113 assigns a new tracking ID to the open-container vehicle. Thus, the tracking ID assigned to a particular open-container vehicle can change while the open-container vehicle is on site. As a result, the tracking ID of a particular open-container vehicle when it is exiting the site may not match the tracking ID in the data structure recorded for that open-container vehicle from when it entered the site (i.e. the data structure stored for the open-container vehicle in the storage means 121).

Preferably, the event system 120 comprises a re-identification module 124. The re-identification module 124 is configured to determine the data structure which is most likely to relate to the open-container vehicle exiting the site from the data structures stored in the storage means relating to open-container vehicles which previously entered the site. Preferably, the re-identification module 124 is activated when the tracking ID of an open-container vehicle exiting the site cannot be matched to a tracking ID stored in the storage means 240.

In this case, the data set (or a portion of the data set) is passed from the object detector 112 to the re-identification module 124. Preferably, the object detector 112 provides a portion of the data set that includes the image data within the bounding box coordinates. The re-identification module 124 is configured to use data relating to the open-container vehicle exiting the site and the data structures stored in the storage means 240 to obtain a most likely match (i.e. the re-identification module is configured to determine the data structure which is most likely to relate to the open-container vehicle exiting the site from the data structures stored in the storage means of open-container vehicles which entered the site).

Preferably, the data relating to the open-container vehicle exiting the site can include one or both of:

- an identification of the owner of the open-container vehicle;
- a comparison of the timestamp for when the open-container vehicle entered the site and the timestamp for the open-container vehicle determined to be exiting the site. For example, the time difference between these timestamps can be compared with the average time the open-container vehicle has spent on site over the last D days or months, where D is a predetermined number.

Preferably, the re-identification module 124 includes a trained triplet loss model to identify an open-container vehicle from meta data in the data structure. More preferably, the vehicle re-identification system includes a Siamese network built on the trained triplet loss model.

Preferably, the re-identification is configured to use one or more of the following variables to obtain a most likely match:

i) the index of a data structure stored in the FIFO queue in the storage means 240 (as the order in which the open-container vehicles enter the site correlates to the order in which they exit the site);

ii) appearance - the visual appearance of an open-container vehicle arriving on site is logged as described above. Thus, the appearance of an open-container vehicle exiting the site can be matched with the appearance of an open-container vehicle that previously entered the site. To improve the accuracy of this matching, a neural network can be used. Preferably, a Siamese network with triplet loss is used. A Siamese network is a type of network architecture that contains Y identical subnetworks used to generate feature vectors for Y inputs and compare them, where Y is two or more. Triplet loss is a loss function for machine-learning algorithms where a baseline (anchor) input is compared to a positive (truthy) input and a negative (falsy) input. The distance from the baseline (anchor) input to the positive (truthy) input is minimized, and the distance from the baseline (anchor) input to the negative (falsy) input is maximized. The neural network is trained with data relating to the appearance of open-container vehicles obtained from the building site. Over time, this results in a matching system that can identify differences between open-container vehicles. Visual signatures can then be generated to facilitate data visualization and embedded in a video feed provided to an operator;

iii) average time spent on site - usually vehicles of a given class have an average time spent on site. This average time is typically specific to a site. For example, on some sites open-container vehicles may spend four minutes, while on other sites they may spend thirty minutes. Thus, the re-identification module 124 calculates the average time open-container vehicles spend on site so that it can be used for matching. Preferably, the re-identification module 124 periodically re-calculates the average time as this time may vary over the period of the project on the site. Preferably, where the meta data includes a classification of the type of open-container vehicle, an average time on site can be calculated for different classifications of open-container vehicle to improve the accuracy of re-identification.

For example, the following equation can be used to calculate a re-identification score for the data structure of an open-container vehicle exiting the site and the nth data structure in the first N data structures in a FIFO queue for storing data structures relating to open-container vehicles that previously entered the site:

$$re-identification\ score\ =\ w_1*time\_metric\ +\ w_2*index\_metric\ +\ w_3*$$
$$appearance\_metric$$

where:

$w_1$ is a first predetermined weighting;

$time\_metric\ =\ \dfrac{1}{abs(tos-avg\_tos)}$ , where $tos$ is the time on site of the open-container vehicle leaving the site and $avg\_tos$ is the average time on site of open-container vehicles and $abs()$ is the absolute function;

$w_2$ is a second predetermined weighting;

$index\_metric\ =\ \dfrac{1}{queue\_index}$ , where $queue\_index$ is the index of the nth vehicle in the queue;

$w_3$ is a third predetermined weighting;

$$appearance\_metric=\frac{1}{app\_distance(vehicle\_leaving-vehicle_n)}$$

where $app\_distance(vehicle\_leaving - vehicle_n)$ is a function indicating the degree of difference between the appearance recorded for the open-container vehicle exiting the site and the appearance in the nth data structure. Preferably, this function is calculated by a neural network as set out above.

Initially, the predetermined weightings have pre-calculated default values. However, the predetermined weightings are preferably updated based on feedback when errors in the re-identification process are detected. For example, when a number of erroneous re-identifications have been corrected by a user, these corrections can be used to adjust one or more of the predetermined weightings to improve the accuracy of re-identification. Any suitable generic algorithm known in the art can be used to perform this adjustment.

The re-identification module 124 provides the re-identification scores to the matching module 123. As noted above, the matching module 123 is configured to match 260 the data structure relating to the open-container vehicle that is exiting the site to a data structure stored in the storage means 240 of an open-container vehicle that previously entered the site. The matching module 123 compares the re-identification scores calculated for the first N data structures. The data structure in the FIFO queue with a 'best' re-identification score indicative of the closest match to the vehicle leaving the site is selected as the data structure related to the open-container vehicle exiting the site.

Once a data structure stored in the storage medium has been matched to the data structure of the open-container vehicle exiting the site, the load state of the open-container vehicle on entry to the site can be compared to the load state of the open-container vehicle on exiting the site.

As a result, deliveries to and from a site can be monitored more accurately. This helps reduce construction costs. For example, waste removal (for example, removal of soil or other materials) is typically paid per load of a given material. In order to accurately calculate the cost of wate removal, it is desirable that open containers arriving on site for waste removal are empty. Similarly, it is desirable that open containers leaving the site with removal material are full. Thus, by verifying the load state of open containers entering and leaving a site, the present disclosure reduces contractor fraud during waste-removal operations thereby lowering construction costs. Similarly, the present system can be used to verify the load states of open containers arriving on site for the delivery of materials.

Further, by improving the accuracy of matching a vehicle leaving a site to the records of that vehicle on entry to the site, a user has a better idea of the activities taking pace on a construction site. This enhances the capacity of known systems and solutions in recognising, classifying or identifying vehicles entering or exiting a site.

The present system improves the accuracy of matching a vehicle leaving a site to the data recorded for the vehicle on site entry. Further, the owner-identification module 125 can be further configured to classify the owner as being a load-delivery owner or a load-removal owner. This allows the system to differentiate between those who deliver and those who dispose of materials. This information can be used to detect fraud (e.g. removed soil being re-dumped on a site to increase the amount of soil to be removed).

The description set out above is by way of example, and those skilled in the art will recognize that alterations can be made to the system and equivalents may be used without departing from the scope of the present disclosure.

For example, the system can be configured to provide an alarm to an operator if an open-container vehicle has the same load state on exiting the site as it had on entering the site - a result that may be indicative of fraud on the part of a contractor.

Further, if the load-state classification module classifies a load as full, the load-state classification module can be further adapted to classify a material type for the load (e.g. soil, gravel, rubble, etc.).

**Claims**

1. A method of monitoring construction comprising:

   capturing images of a site with a sensor;
   determining, based on captured images, whether an object on the site is an open-container vehicle;
   determining, based on captured images, whether the open-container vehicle is entering or leaving the site;
   determining a load classification for the open-container vehicle based on captured images if it is determined that the open-container vehicle is entering or leaving a site, wherein the load classification is indicative of a volume of material in the open container of the open-container vehicle; and
   estimating a volume of material moved to or from the site based on the classification.

2. The method of claim 1, comprising tracking the open-container vehicle, wherein tracking comprises determining data relating to whether the open-container vehicle is entering or leaving the site.

3. The method of claim 2, comprising:
   defining a region of interest, wherein:
   determining data relating to whether the open-container vehicle is entering or leaving the site comprises calculating a direction of travel of the open-container vehicle within the region of interest.

4. The method of claim 2 or 3, comprising assigning a tracking identification to the open-container vehicle.

5. The method of any preceding claim, comprising:

   extracting a portion of image data relating to the open-container vehicle from the captured images; and
   determining whether an object on the site is an open-container vehicle from the extracted portion of image data.

6. The method of any preceding claim wherein estimating the load classification comprises segmenting image data to extract image data relating to the open container.

7. The method of any preceding claim, wherein determining data relating to whether the open-container vehicle is entering or leaving the site comprises:

   when it is determined that an open-container vehicle is entering the site, recording a first set of gate data relating to the open-container vehicle; and
when it is determined that an open-container vehicle is exiting the site:

recording a second set of gate data relating to the open-container vehicle; and
estimating a volume of material moved to or from the site based on comparing a second set of gate data to a first set of gate data.

8. The method of claim 7, wherein:

recording the first set of gate data comprises recording a portion of a captured image that relates to the open-container vehicle in the first set of gate data; and
recording the second set of gate data comprises recording a portion of a captured image that relates to the open-container vehicle in the second set of gate data.

9. The method of claim 7 or 8, wherein:

recording the first set of gate data comprises recording an entry timestamp, the entry timestamp being indicative of a time when the first set of gate data is recorded, wherein the first set of gate data includes the entry timestamp; and
recording the second set of gate data comprises recording an exit timestamp, the exit timestamp being indicative of a time when the second set of gate data is recorded, wherein the second set of gate data includes the exit timestamp.

10. The method of any one of claims 7 to 8, wherein the first set of gate data is stored in a first-in-first-out queue of first sets of gate data.

11. The method of any one of claims 7 to 10, wherein comparing the second set of gate data to the first set of gate data comprises selecting a first set of gate data from a plurality of first sets of gate data to compare to the second set of gate data.

12. The method of claim 11 when dependent upon claims 8 to 10, comprising calculating a re-identification score for a first set of gate data, based on a second set of gate data, wherein the re-identification score is based on:

the difference between the second timestamp and the first timestamp;
the position of the first set of gate data in the first-in-first-out queue; and
an appearance metric, wherein the appearance metric is indicative of the degree of difference between the portion of a captured image recorded in the first set of gate data and the portion of a captured image recorded in the second set of gate data.

13. The method of claim 11, comprising:
assigning a tracking identification to the open-container vehicle when the open-container vehicle is detected, wherein:

the first and second sets of gate data comprise a tracking identification; and
selecting the first set of gate data comprises selecting a first set of gate data that includes a tracking identification that matches the tracking identification of the second set of gate data.

14. An apparatus configured to perform a method according to any preceding claim.

15. A computer program comprising instructions which, when executed by a computer coupled to a sensor, cause the computer to carry out a method according to any one of claims 1-14.

FIG. 1

EP 4 198 912 A1

FIG. 2

FIG. 3

13

FIG. 3(Continued)

EP 4 198 912 A1

Europäisches
Patentamt

European
Patent Office

Office européen
des brevets

# EUROPEAN SEARCH REPORT

Application Number

EP 21 21 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TSAI MENG-HAN ET AL: "SEMA: A Site Equipment Management Assistant for Construction Management", KSCE JOURNAL OF CIVIL ENGINEERING, KOREAN SOCIETY OF CIVIL ENGINEERS, SEOUL, vol. 26, no. 3, 17 November 2021 (2021-11-17), pages 1144-1162, XP037692696, ISSN: 1226-7988, DOI: 10.1007/S12205-021-0972-2 [retrieved on 2021-11-17] * abstract * * page 1145, column 1, line 19 - line 21 * * page 1146, column 1, line 51 - column 2, line 12 * * page 1149, column 1, line 23 - line 27 * * page 1149, column 2, line 3 - line 22 * * page 1151, column 1, line 6 - line 8 * * page 1152, column 2, line 7 - line 9 * * page 1153, column 2, line 2 - line 3 * * page 1158, column 1, line 18 - line 19 * * figures 10-11 * ----- -/-- | 1-15 | INV. G06V10/25 G06V10/26 G06V10/74 G06V10/82 G06V20/54 |
| | | | TECHNICAL FIELDS SEARCHED (IPC) G06V |

The present search report has been drawn up for all claims

| Place of search | Date of completion of the search | Examiner |
|---|---|---|
| The Hague | 27 May 2022 | De Coi, Juri |

page 1 of 2

Europäisches
Patentamt

European
Patent Office

Office européen
des brevets

## EUROPEAN SEARCH REPORT

Application Number

EP 21 21 5052

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIU QUAN ET AL: "Deep Learning Model Comparison for Vision-Based Classification of Full/Empty-Load Trucks in Earthmoving Operations", APPLIED SCIENCES, [Online] vol. 9, no. 22, 14 November 2019 (2019-11-14), pages 1-20, XP055924691, DOI: 10.3390/app9224871 Retrieved from the Internet: URL:https://www.mdpi.com/2076-3417/9/22/4871> [retrieved on 2022-05-24] * abstract * * page 1, line 39 – line 40 * * page 3, line 3 – line 10 * * page 6, line 15 – line 16 *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 27 May 2022 | De Coi, Juri |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SCHROFF.** *FaceNet: A Unified Embedding for Face Recognition and Clustering*